# EUROPEAN PATENT APPLICATION

(11) **EP 4 008 763 A1**
(43) Date of publication of application: **08.06.2022**
(21) Application number: 21160098.6
(22) Date of filing: 01.03.2021
(51) Int. Cl.: C11C 5/00, C10L 5/44

(54) **SHEA CANDLE AND PREPARATION METHOD THEREOF**

(30) Priority: 07.12.2020 CN 202011438409
(71) Applicant: Dalian Talent Polska sp. z o.o., 33-240 Zabno (PL)
(72) Inventor: Wang, Lixin, Dalian, Liaoning 116000 (CN)
(74) Representative: Bartula-Toch, Marta

(57) **Abstract**

The present invention discloses a candle and a preparation method thereof. The candle comprises a shea wax having a slip point of 30-70°C and a crystallization modifier. The shea wax having the slip point of 30-70°C refers to a kind of shea wax having a slip point of 30-70°C or a composition of various shea waxes having slip point of 30-70°C. The crystallization modifier is one or two of mono/diglyceride fatty acid ester and soft wax. The candle provided in the present invention solves the technical problems of using two kinds of shea waxes having the slip point of greater than or equal to 46°C, and only limiting to prepare container candle. Moreover, the prepared candle has smooth surface, free of spots on sides, and no oil bleed or reversible oil bleed at high temperature.

## Description

The present invention belongs to the technical field of candle preparation, and in particular relates to a shea candle and a preparation method thereof.

At present, raw materials for preparing the candles are mainly paraffin waxes and vegetable waxes. Paraffin waxes are refined from petroleum, which is a non-renewable resource. Vegetable waxes are mainly palm waxes or soy waxes. Although palm waxes or soy waxes are a renewable resource, only by felling a vast natural forest, using precious forest resources or performing manual planting in a large batch of farmlands, can palm waxes or soy waxes be obtained.

Shea nuts are fruits of shea trees growing in virgin forests. Kernels of the shea nuts are processed to obtain shea crude oil. The crude oil is fractionated to obtain shea fat and shea butter. The shea fat mainly serves as cosmetics to play a role of moisturizing skin. The fractionated byproduct shea butter is hydrogenerated to obtain the shea wax. The shea wax has the advantages that the shea wax is renewable and low in cost, it is not needed to fell the natural forests, manual planting is not needed and the like. Therefore, it is of important significance in preparing the candles by using the shea wax.

According to the technical scheme provided by the patent with the authorized publication number CN 202032456 U, the shea butter involved in candle materials is added to moisture skin, so that the shea butter functions as the cosmetics actually.

According to the patent with the authorized publication number CN1020006855A, although the shea fat/butter is involved in the candle materials, too, the shea fat/butter is added to achieve a massage function, and finally, the shea fat/butter aims to moisturize skin, so that the shea fat/butter functions as the cosmetics actually.

According to the patent with the authorized publication number CN 104211644 B, through the shea wax is also used as the candle material, two shea wax materials having the slip points being greater than or equal to 46°C must be used and are limited to the container wax in the scheme, and the shea wax materials must be prepared by means of a secondary pouring method and have the problem that the prepared candles are not smooth on surface, and are susceptible to oil seepage at high temperatures (over 38°C).

In order to solve a series of technical problems that a lot of paraffin waxes, palm waxes or soy waxes are consumed, two types of shea waxes having the slip melting points being greater than or equal to 46°C must be used, it is limited to prepare the container candle and the like in existing candle preparation, the invention provides a container wax and a non-container wax employing the shea wax materials and a method for preparing the same.

The technical scheme of the invention is as follows:
On the one hand, the invention provides a shea candle. The candle comprises shea wax having the slip melting point of 30-70°C and at least one crystallization modifier. The shea wax can be a composition of one or more types of shea waxes having the slip melting point of 30-70°C. The crystallization modifier is one or two of mono/di-glyceride fatty acid ester or soft wax. The candle comprises 5-100% by weight of shea wax and 0-10% by weight of crystallization modifier.

Based on the scheme, preferably, the candle further comprises vegetable fat, paraffin wax, synthetic wax or an additive; wherein the vegetable fat, the paraffin wax, the synthetic wax and the additive totally accounting for 0-95% by weight of the candle.

Based on the scheme, preferably, any one shea wax is a semi-hydrogenated and/or perhydrogenated shea wax; and the slip melting point of any one shea wax is 30-70°C and the iodine value is between 0-70.

Based on the scheme, preferably, the candle is in the form of container candle or non-container candle. One or more shea waxes might be used to prepare both types of candles. The slip melting point of any shea waxes used to prepare the container candle is 30-60°C. Preferably the slip melting point of the used waxes is between 35-55°C, and the shea waxes totally accounting for 20-100% by weight of the candle. The slip melting point of the any shea waxes used to prepare the non-container candle is 40-70°C. Preferably the slip melting point of the used waxes is between 50-60°C, and the shea waxes totally accounting for 5-60% by weight of the candle.

Based on the scheme, preferably, the vegetable fat is obtained by refining, fractionating, semi-hydrogenating or perhydrogenating.

Based on the scheme, preferably, the paraffin wax is at least one of semi-refined paraffin wax or fully-refined paraffin wax.

Based on the scheme, preferably, the additive is at least one of dye, essence or other accessories, especially α-polyethylene wax.

Based on the scheme, preferably, the essence in the candle accounts for 0-15% by weight.

On the other hand, the invention further provides a method for preparing the candle, including the following steps of:
(1) placing an inner core wax block in a container;
(2) weighing raw materials according to a formula and melting and mixing the raw materials to obtain liquid wax, and pouring the liquid wax into the container when the temperature of the liquid wax is 50-80 °C after uniformly stirring the liquid wax; and
(3) cooling and forming the poured container in an environment temperature of 15-35 °C to obtain the candle.

Based on the scheme, preferably, the step (2) is performed at one time or at multiple times.

Based on the scheme, preferably, the candle is in the form of container candle or non-container candle; wherein, a wick is further fixed in the container used in the step (1) when the container candle is prepared; and when the non-container candle is prepared, the step (3) further comprises the step of removing the container to obtain the non-container candle after cooling and forming the container.

Based on the scheme, preferably, in the step (3), the cooling time is 1-12 hours.

Based on the scheme, preferably, in the step (2), the container is preheated to 30-70°C prior to pouring.

By improving composition of the candle and adding the special crystallization modifier, the technical problems that in the prior art, two types of shea waxes having the slip melting points being greater than or equal to 46°C must be used and it is limited to prepare the container candle and the like are solved, and furthermore, the prepared candle is smooth in surface and free of spots on the side surface, and oil is not permeated at a high temperature (38°C) or oil permeation is reversible.

The subject of the invention is illustrated by the drawings, where:

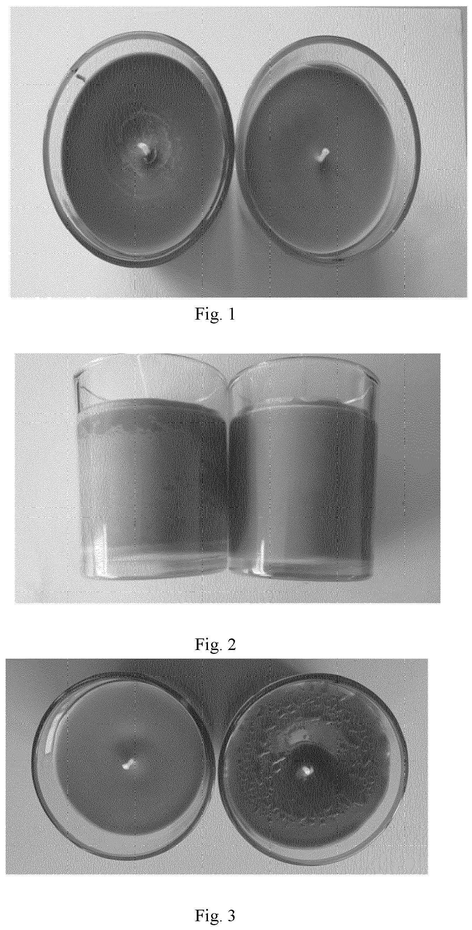

Fig.1 is appearance comparison of candles prepared by example 7 and comparative example 1; the comparative example 1 is shown on the left side of the Fig.1 and the example 7 is shown on the right side of the Fig.1;
Fig.2 is appearance comparison of candles prepared by example 8 and comparative example 2; the comparative example 2 is shown on the left side of the Fig.2 and the example 8 is shown on the right side of the Fig.2;
Fig.3 is oil seepage conditions of candles prepared by example 8 and comparative example 2; the example 8 is shown on the left side of the Fig.3 and the example 2 is shown on the right side of the Fig.3.
The present invention is illustrated by the embodiments below.

### Example 1

A method for preparing a shea candle, the prepared candle being a container candle, the method comprising the following steps of:
S1. an inner core wax block was adhered with a wick to a bottom of a glass cup, and the glass cup was placed on a conveyor belt;
S2. shea wax having the slip point of 50°C was heated and melted to obtain a liquid wax 1;
S3. the crystallization modifier of mono/di-glyceride fatty acid ester was added into the liquid wax 1 obtained in the S2; the adding mount of the crystallization modifier was 3% by weight of the liquid wax 1, the crystallization modifier was fully and uniformly mixed with the liquid wax 1 to obtain a liquid wax 2;
S4. the liquid wax 2 obtained in S3 was cooled to 65-70°C and was poured into the glass cup, and the liquid wax was 1 cm higher than the inner core wax block; and
S5. the glass cup into which the liquid wax 2 poured was placed on the conveyor belt in a 20-25 °C environment to cool, and the surface was baked after solidifying the liquid wax till the liquid wax was fully solidified to obtain the candle.

### Example 2

A method for preparing a shea candle, the prepared candle being a container candle, the method comprising the following steps of:
S1. an inner core wax block was adhered with a wick to a bottom of a glass cup and the glass cup was placed on a conveyor belt;
S2. the shea wax I having the slip point of 46°C was mixed with the shea wax II having the slip point of 60°C in a weight ratio of 85:15, and the shea wax I and the shea wax II were heated and melted to obtain a liquid wax 1;
S3. the crystallization modifier - mono/di-glyceride fatty acid ester was added into the liquid wax 1 obtained in S2, the adding mount of the crystallization modifier was 3% by weight of the liquid wax 1, and the crystallization modifier was fully and uniformly mixed with the liquid wax 1 to obtain a liquid wax 2;
S4. the liquid wax 2 obtained in S3 was cooled to 65-70°C and was poured into the glass cup, and the liquid wax was 1 cm higher than the inner core wax block; and
S5. the glass cup into which the liquid wax 2 was poured was placed on the conveyor belt in a 20-25 °C environment temperature to cool, and the surface was baked after solidifying the liquid wax till the liquid wax was fully solidified to obtain the candle.

### Example 3

A method for preparing a shea candle, the prepared candle being a container candle, the method comprising the following steps of:
S1. an inner core wax block with a wick was adhered to a bottom of a glass cup, and the glass cup was placed on a conveyor belt;
S2. the shea wax I having the slip point of 50°C was heated and melted to obtain a liquid wax 1;
S3. the crystallization modifier - mono/di-glyceride fatty acid ester was added into the liquid wax 1 obtained in S2, the adding mount of the crystallization modifier was 3% by weight of the liquid wax 1, and the crystallization modifier was fully and uniformly mixed with the liquid wax to obtain a liquid wax 2;
S4. the liquid wax 2 was poured into the glass cup when the liquid wax 2 obtained in S3 was cooled to 50-55°C, the liquid wax was aligned with the inner core wax block;
S5. the glass cup into which the liquid wax 2 was poured was placed on the conveyor belt in S4 in an environment of 20-25 °C to cool for 30 - 60min.;
S6. the shea wax II having the slip point of 46°C was mixed with the paraffin wax having the melting point of 55°C in a weight ratio of 8:2, and the shea wax II and the paraffin wax was heated and melted to obtain a liquid wax 3;
S7. the crystallization modifier - soft wax was added into the liquid wax 3 obtained in S6, the adding amount of the soft wax was 7% by weight of the liquid wax 3, and the soft wax with the liquid wax was fully and uniformly mixed to obtain a liquid wax 4;
S8. the crystallization modifier α-polyethylene wax vyar103 was added into the liquid wax 4 obtained in S7, the adding amount of vyar103 was 0.2% by weight of the liquid wax 3, and the vyar103 and the liquid wax 4 was fully and uniformly mixed to obtain a liquid wax 5;
S9. the liquid wax 5 obtained in S8 was cooled to 60-65 °C and was poured into the glass cup poured in S4, and the liquid wax was 1 cm higher than the inner core wax block; and
S10. the glass cup poured in S9 was placed on the conveyor belt in an environment temperature of 20-25 °C to cool until the wax liquid was fully solidified to obtain the candle.

### Example 4

A method for preparing a shea candle, the prepared candle being a container candle, the method comprising the following steps of:
S1. an inner core wax block with a wick was adhered to a bottom of a glass cup, the glass cup was placed on a conveyor belt and was preheated, and the preheating temperature was 40°C;
S2. the shea wax having the slip point of 45 °C was mixed with the vegetable fat - palm oil having the melting point of 35 °C in a weight ratio of 8:2, and the shea wax and the palm oil were heated and melted to obtain a liquid wax 1;
S3. the crystallization modifier soft wax was added into the liquid wax 1 obtained in S2, the adding amount of the soft wax was 7% by weight of the liquid wax 1, and the soft wax and the liquid wax 1 was fully and uniformly mixed to obtain a liquid wax 2;
S4. the crystallization modifier α-polyethylene wax vyar103 was added into the liquid wax 2 obtained in S3, the adding amount of vyar103 was 0.2% by weight of the liquid wax 1, and the vyar103 was fully and uniformly mixed with the liquid wax 2 to obtain a liquid wax 3; and
S9. the liquid wax 4 obtained in S4 was cooled to 60-65 °C and was poured into the glass cup preheated in S1 on the conveyor belt, and the glass cup was cooled in an environment temperature of 20-25 °C until the liquid wax was fully solidified.

By adding the special crystallization modifiers in the examples 1-4, the surfaces of the prepared candles are smooth, and there is no oil bleed or reversible oil bleed at high temperature (38°C).

### Example 5

A method for preparing a shea candle, the prepared candle being a non-container candle, the method comprising the following steps of:
S1. a cylindrical plastic mould was preheated to 50°C and an inner core wax block was placed at the center of the mould;
S2. the shea wax having the slip point of 55°C was mixed with the synthetic wax - fischer-tropsch wax in a weight ratio of 2:8, and the shea wax and the fischer-tropsch wax were heated and melted to obtain a liquid wax 1;
S3. the crystallization modifier soft wax was added into the liquid wax 1 obtained in S2, the adding amount of the soft wax was 1% by weight of the liquid wax 1, and the soft wax was fully and uniformly mixed with the liquid wax 1 to obtain a liquid wax 2;
S4. the liquid wax 2 obtained in S3 was cooled to 80°C and was poured into a mould in S1, and the mould was placed in an environment temperature of 20-25°C to cool until the liquid wax was fully solidified; and
S5. the product in S4 was demoulded, drilled and arranged with a wick to obtain a cylindrical candle.

### Example 6

A method for preparing a shea candle, the prepared candle was a non-container candle, the method comprising the following steps of:
S1. a cylindrical plastic mould was preheated to 50°C, and an inner core wax block was placed at the center of the mould;
S2. the shea wax having the slip point of 52°C was mixed with the paraffin wax having the melting point of 60°C in a weight ratio of 4:6, and the shea wax and the paraffin wax were heated and melted to obtain a liquid wax 1;
S3. the crystallization modifier soft wax was added into the liquid wax 1 obtained in S2, the adding amount of the soft wax was 1% by weight of the liquid wax 1, and the soft wax was fully and uniformly mixed with the liquid wax 1 to obtain a liquid wax 2;
S4. the liquid wax 2 obtained in S3 was cooled to 80°C and poured into the mould in S1, and the mould was placed in an environment temperature of 20-25°C to cool until the liquid wax was fully solidified; and
S5. the product in S4 was demoulded, drilled and arranged with a wick to obtain a cylindrical candle.

### Example 7

Except parameters listed in the table 1, reference on other steps was made to the example 2.

### Comparative Example 1

S1. a glass cup with a wick fixed was placed at a bottom on a conveyor belt;
S2. the shea wax I having the slip point of 52°C with the shea wax II having the slip point of 61°C in a weight ratio of 85:15, and the shea wax I and the shea wax II were heated until the shea wax I and the shea wax II were fully melted;
S3. a dye was added into the liquid wax obtained in the S2, the adding amount of the dye was 0.1% by weight of the liquid wax obtained in the S2, and the dye was fully and uniformly mixed with the liquid wax obtained in S2, and the temperature of the liquid wax was 70°C;
S4. the wax liquid obtained in S3 was poured to the lower part of the glass cup to finish the first pouring, the pouring height was 7/10 of the height of the glass cup;
S5. the glass cup containing the liquid wax in the S3 was fed into a temperature control tunnel kiln at a temperature of 15°C through a conveyor belt to cool for 15 min;
S6. the shea wax I having the slip point of 52°C was mixed with the paraffin wax having the melting point of 55°C in a weight ratio of 80:20, and the shea wax and the paraffin wax were heated until the shea wax and the paraffin wax were fully melted;
S7. the crystallization modifier - VYBAR103 was added into the liquid wax obtained in S5, the adding amount of the crystallization modifier was 0.2% by weight of the liquid wax poured at the second time;
S8. the dye was added into the liquid wax obtained in S7, the adding amount of the dye was 0.1% by weight of the liquid wax obtained in S7, and the dye was fully and uniformly mixed with the liquid wax obtained in S7, and the temperature of the liquid wax was 70°C;
S9. the liquid wax obtained in the S8 was poured into the glass cup treated by the S5 for the second pouring, the pouring temperature was 70°C and the pouring height was 2/10 of the height of the glass cup; and
S10. the glass cup containing the liquid wax in the S9 was naturally cooled on the conveyor belt until the liquid wax was fully solidified to form a candle product.

The environment temperature during first pouring was 20°C, and the environment temperature during second pouring was 20°C.

**Table 1 Formula and appearance comparison of example 7 and comparative example 1**

| Formula | | Pouring temperature °C | Appearance |
|---|---|---|---|
| Comparative example 1 | Lower layer: 85% of shea wax 1 + 15% of shea wax 2 + 0.1% by weight of dye; Upper layer: 80% of shea wax 1 + 20% of 54# paraffin wax + 0.2% by weight of vybar103 + 0.1% by weight of dye | 70 | White spots on the side wall, shown on the left side of Fig. 1 |
| Example 7 | Example 2 + dye Whole body: 85% of shea wax 1 + 15% of shea wax 2 + 3% by weight of mono/di-glyceride fatty acid ester + 0.1% by weight of dye | 70 | no problems, shown on the right side of Fig. 1 |

### Example 8

Except parameters listed in the table 2, reference on other steps was made to the example 3.

### Comparative Example 2

Except parameters listed in the table 2, reference on other steps was made to the comparative example 1.

**Table 2 Formula and appearance comparison of example 8 and comparative example 2**

| Formula | | Pouring temperature °C | Appearance | High temperature 38°C |
|---|---|---|---|---|
| Comparative example 2 | Comparative example 1 + essence: Lower layer: 85% of shea wax 1 + 15% of shea wax 2 + 0.1% by weight of dye + 5% by weight of vanilla essence; | 70 | The surface is unsmooth and the wick is cracked, shown on the left side of the Fig. 2. | Slight oil seepage, shown on the right side of the Fig. 3 |
| | Upper layer: 80% of shea wax 1 + 20% of 54# paraffin wax + 0.2% by weight of vybar103 + 0.1% by weight of dye + 5% by weight of vanilla essence | | | |
| Example 8 | Example 3 + essence + dye + shea wax 2: Lower layer: 85% of shea wax 1 + 15% of shea wax 2 + 3% by weight of mono/diglyceride fatty acid ester + 0.1% by weight of dye + 5% by weight of vanilla essence; | 70 | no problems, shown on the right side of Fig.2 | no problems, shown on the left side of Fig.3 |
| | % Upper layer: 80% of shea wax 1 + 20% of 54# paraffin wax + 7% by weight of soft wax + 0.2% by weight of vybar103 + 0.1% by weight of dye + 5% of vanilla essence | | | |

## Claims

1. A candle, comprising at least one type of shea wax and at least one crystallization modifier, **characterized in that** the shea wax is having a slip melting point of 30-70°C and the shea wax totally accounts for 5-100% by weight and the crystallization modifier accounts for 0-10% by weight, and the crystallization modifier is at least one of mono/di-glyceride fatty acid ester or soft wax.

2. The candle according to claim 1, further comprising a vegetable fat, a paraffin wax, a synthetic wax or an additive; wherein the vegetable fat, the paraffin wax, the synthetic wax and the additive totally accounts for 0-95% by weight.

3. The candle according to claim 1, wherein the shea wax is a semi-hydrogenated or perhydrogenated shea wax, a slip melting point of the shea wax is 30-70°C and its iodine value is between 0-70.

4. The candle according to claim 1, wherein the candle is in the form of container candle or non-container candle; wherein the container candle comprises at least one shea wax having the slip melting point of 30-60°C and the shea wax totally accounts for 20-100% by weight; wherein the non-container candle comprises at least one shea wax having the slip melting point of 40-70°C and the shea wax totally accounts for 5-60% by weight.

5. The candle according to claim 4, wherein the container candle comprises at least one shea wax having the slip melting point of 35-55°C; and the non-container candle comprises at least one shea wax having the slip melting point of 50-60°C.

6. The candle according to claim 2, wherein the vegetable fat is obtained by refining, fractionating, semi-hydrogenating or perhydrogenating.

7. The candle according to claim 2, wherein the paraffin wax is at least one of semi-refined paraffin wax and fully-refined paraffin wax.

8. The candle according to claim 2, wherein the additive is at least one of a dye, an essence or α-polyethylene wax.

9. The candle according to claim 7, wherein the essence in the candle accounts for 0-15% by weight.

10. A method for preparing the candle according to any one of claims 1-9, comprising the following steps:
(1) placing an inner core wax block in a container;
(2) weighing raw materials according to a formula and melting and mixing the same to obtain a liquid wax, and pouring the liquid wax into the container when a temperature of the liquid wax is 50-80°C after uniformly stirring the liquid wax; and
(3) cooling and forming the poured container in an environment temperature of 15-35 °C to obtain the candle.

11. The method according to claim 10, wherein the step (2) is performed at least one time.

12. The method according to claim 10, wherein the candle is in the form of container candle or non-container candle; wherein during the preparation of container candle, a wick is further fixed in the container used in the step (1); wherein during the preparation of non-container candle, the step (3) further comprises the step of removing the container to obtain the non-container candle after cooling and forming the container.

13. The method according to claim 10, wherein in the step (3), the cooling time is 1-12 hours.

14. The method according to claim 10, wherein in the step (2), the container is preheated to 30-70°C prior to pouring.
